(19) Europäisches Patentamt
European Patent Office
Office européen des brevets

(11) Veröffentlichungsnummer: **0 241 476**
**B1**

(12) # EUROPÄISCHE PATENTSCHRIFT

(45) Veröffentlichungstag der Patentschrift: **22.08.90**

(51) Int. Cl.$^5$: **C 09 D 5/44,** C 08 G 59/02, C 08 G 59/14

(21) Anmeldenummer: **86903341.5**

(22) Anmeldetag: **17.05.86**

(86) Internationale Anmeldenummer: **PCT/EP86/00303**

(87) Internationale Veröffentlichungsnummer: **WO 86/07083 04.12.86 Gazette 86/26**

(54) **WASSERVERDÜNNBARE BINDEMITTEL FÜR KATIONISCHE ELEKTROTAUCHLACKE UND VERFAHREN ZU IHRER HERSTELLUNG.**

(30) Priorität: **24.05.85 DE 3518770**

(43) Veröffentlichungstag der Anmeldung: **21.10.87 Patentblatt 87/43**

(45) Bekanntmachung des Hinweises auf die Patenterteilung: **22.08.90 Patentblatt 90/34**

(84) Benannte Vertragsstaaten: **AT BE CH DE FR GB IT LI NL SE**

(56) Entgegenhaltungen:
**EP-A-0 059 895**
**EP-A-0 127 915**
**EP-A-0 135 811**

(73) Patentinhaber: **BASF Lacke + Farben Aktiengesellschaft**
**Max-Winkelmann-Strasse 80**
**D-4400 Münster (DE)**

(72) Erfinder: **DOBBELSTEIN, Arnold**
**Emil-Nolde-Weg 95**
**D-4400 Münster (DE)**
Erfinder: **GEIST, Michael**
**Rubensstrasse 251**
**D-4400 Münster (DE)**
Erfinder: **OTT, Günther**
**Von-Holte-Strasse 101 a**
**D-4400 Münster (DE)**
Erfinder: **SCHÖN, Georg**
**Schillerstrasse 2**
**D-4416 Everswinkel (DE)**

**EP 0 241 476 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die vorliegende Erfindung betrifft wasserverdünnbare Bindemittel für kationische Elektrotauchlacke auf der Basis von modifizierten Epoxidharzen, die Ammonium-, Sulfonium- und/oder Phosphoniumgruppen enthalten.

Die kationische Elektrotauchlackierung ist ein vor allem zum Grundieren häufig angewandetes Lackierverfahren, bei dem wasserverdünnbare kationische Gruppen tragende Kunstharze mit Hilfe von Gleichstrom auf elektrisch leitende Körper aufgebracht werden.

Die Verwendung modifizierter Epoxidharze als Bindemittel für kationische Elektrotauchlacke ist bekannt (US—PS 4,104,147; US—PS 4,260,720).

Die bisher für einen Einsatz in kationischen Elektrotauchlacken zur Verfügung stehenden modifizierten Epoxidharze sind mit aliphatischen Kohlenwasserstoffen nur schlecht verträglich, in ihrer Elastisität noch verbesserungsbedürftig und führen zu Schichten, die nicht problemlos überlackiert werden können und in ihrer Dicke noch weiter erhöhlt werden sollten.

Eine Aufgabe der vorliegenden Erfindung bestand darin, neue modifizierte Epoxidharze zu entwickeln, die frei von den oben aufgezeigten Nachteilen sind.

Die Aufgabe wurde erfindungsgemäß dadurch gelöst, daß Bindemittel entwickelt wurden, die dadurch gekennzeichnet sind, daß sie durch eine Umsetzung von

(A) einem Diglycidylether eines Polyphenols oder einem Diglycidylether eines mehrwertigen Alkohols oder einem Diglycidylether einer Polycarbonsäure oder einer Diepoxidverbindung, die durch Epoxidierung einer olefinisch ungesättigten alicyclischen Verbindung erhältlich ist, oder einem Gemisch von solchen Diepoxidverbindungen, wobei das Epoxidäquivalentgewicht der Diepoxidverbindungen unter 2000 liegt, mit

(B) einer Verbindung der allgemeinen Formel $R^1$—OH, wobei $R^1$ folgende Bedeutung haben kann

$R^1$ = Aryl oder 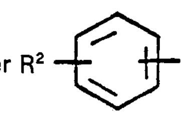

$R^2$ = H, Alkyl (bevorzugt mit 1 bis 20 C-Atomen, besonders bevorzugt t-Butyl, Nonyl, Dodecyl), $R^3$—O— (bevorzugt in p-Stellung zur phenolischen OH-Gruppe) mit $R^3$ = Alkyl (bevorzugt mit 1 bis 10 C-Atomen, besonders bevorzugt Methyl) oder HO—(—$CHR^4CH_2$—O—)$_n$—$CHR^4CH_2$— mit n = 0—10 und $R^4$ = H oder Methyl,

oder eine Verbindung der allgemeinen Formel $R^5$—SH, wobei $R^5$ folgende Bedeutung haben kann

$R^5$ = Alkyl (bevorzugt mit 1 bis 20 C-Atomen, besonders bevorzugt n-Butyl, Dodecyl), Cycloalkyl (bevorzugt Cyclohexyl), Aryl (besonders bevorzugt Phenyl), Aralkyl (besonders bevorzugt Benzyl), $R^6$—OOC—$CH_2$—, $R^7$—OOC $CH_2CH_2$— $R^6$, $R^7$ = Alkyl mit 1 bis 8 C-Atomen, bevorzugt Butyl, 2 Ethyl-hexyl, oder einem Gemisch aus solchen Verbindungen und

(C) primären und/oder sekündaren Aminen oder deren Salzen und/oder dem Salz eines tertiären Amins, einer Sulfid/Säure- oder Phosphin/Säuremischung oder einem Gemisch aus diesen Verbindungen erhältlich sind, wobei die Komponenten A und B in einem Molverhältnis von 10:1 bis 1:1, bevorzugt 4:1 bis 1,5:1 eingesetzt werden, die Umsetzung der Komponente A mit der Komponente B bei 100 bis 190°C gegebenenfalls in Anwesenheit eines Katalysators durchgeführt und die Wasserverdünnbarkeit gegebenenfalls durch Protonisierung mit einer wasserlöslichen Säure erreicht wird.

Die neuen modifizierten Epoxidharze können aus leicht zugänglichen Ausgangsstoffen gewonnen werden und zeichnen sich durch gute Verträglichkeit mit aliphatischen Kohlenwasserstoffen und hohe Elastizität aus.

Ihr Einsatz in kationischen Elektroauchlacken führt zur Abscheidung von dicken Schichten, die gut überlackiert werden können.

Es wurde gefunden, daß die Modifizierung mit der Komponente B sowohl eine Erhöhung der Elastizität als auch eine Steilgerung in der Dicke der abgeschiedenen Schichten zur Folge hat.

Durch zusätzliche Umsetzung mit der Komponente D kann eine weitere Erhöhung der Elastizität der modifizierten Epoxidharze und auch eine zusätzliche Steigerung in der Dicke der abgeschiedenen Schichten erreicht werden.

Als Komponente A können alle Verbindungen eingesetzt werden, die zwei rekative Epoxidgruppen enthalten und ein Epoxid-Äquivalentgewicht aufweisen, das unter 2 000, bevorzugt unter 1 000, besonders bevorzugt unter 500 liegt.

Besonders bevorzugte Epoxidverbindungen sind aus Polyphenolen und Epihalohydrinen hergestellte Diglycidylether von Polyphenolen. Als Polyphenole können zum Beispiel eingesetzt werden:

Ganz besonders bevorzugt: Bisphenol A und Bisphenol F

Gesonders bevorzugt: 1,1-Bis-(4-hydroxyphenyl)n-heptan

Außerdem sind auch 4,4′ Dihydroxybenzophenon, Bis-(4-hydroxyphenyl)-1,1-ethan, Bis-(4-hydroxyphenyl) 1,1-isobutan, Bis-(4-hydroxy-tertiär-butylphenyl)-2,2-propan, Bis-(2-hydroxynaphtyl)-methan, 1,5 Dihydroxynaphtalin und phenolische Novolakharze geeignet.

Bevorzugte Epoxidverbindungen sind auch Diglycidylether von mehrwertigen Alkoholen wie Ethylenglykol, Diethylenglykol, Triethylenglykol, 1,2-Propylenglykol, 1,4-Propylenglykol, 1,5-Pentandiol,

1,2,6-Hexantriol, Glycerin und Bis-(4-hydroxycyclohexyl)-2,2-propan.

Es können auch Diglycidylester von Polycarbonsäuren, wie zum Beispiel Oxalsäure, Bernsteinsäure, Glutarsäure, Terephthalsäure, 2,6-Naphtalindicarbonsäure, dimerisierter Linolensäure usw., eingesetzt werden. Typische Beispiele sind Glycidyladipat und Glycidylphthalat.

Ferner sind Hydantoinepoxide, epoxidiertes Polybutadien und Diepoxidverbindungen geeignet, die man durch Epoxidierung einer olefinisch ungesättigten alicyclischen Verbindung erhält.

Als Komponente B können alle Verbindungen eingesetzt werden, die eine Phenol- oder Thiolgruppe enthalten und unter den während der Herstellung der erfindungsgemäßen modifizierten Epoxidharze herrschenden Reaktionsbedingungen gegenüber Epoxidgruppen monofunktionell reagieren.

Das aus Komponente A und Komponente B hergestellte Zwischenprodukt weist endständige Epoxidgruppen und ein mittleres Molekulargewicht von 400 bis 5 000 auf.

Als Komponente C können primäre oder sekundäre Amine bzw. deren Salze, Salze von tertiären Aminen, Sulfid/Säure- oder Phosphin/Säuremischungen oder ein Gemisch aus diesen Verbindungen eingesetzt werden, wobei die sekundären Amine besonders bevorzugte C Komponenten sind.

Bevorzugt sollte das Amin eine in Wasser lösliche Verbindung sein. Beispiele solcher Amine sind Mono- und Dialkylamine, wie Methylamin, Ethylamin, Propylamin, Butylamin, Dimethylamin, Diethylamin, Dipropylamin, Methylbutylamin und dergleichen. Geeignet sind ebenfalls Alkanolamine wie zum Beispiel Methylethanolamin, Diethanolamin und dergleichen. Ferner sind Dialkylaminoalkylamine wie zum Beispiel Dimethylaminoethylamin, Diethylaminopropylamin, Dimethylaminopropylamin und dergleichen geeignet.

In den meisten Fällen werden niedermolekulare Amine verwendet, doch ist es auch möglich, höhermolekulare Monoamine anzuwenden.

Polyamine mit primären und sekundären Aminogruppen können in Form ihrer Ketimine mit den Epoxidgruppen umgesetzt werden. Die Ketimine werden aus den Polyaminen in bekannter Weise hergestellt.

Die Amine können auch noch andere Gruppen enthalten, doch sollen diese die Umsetzung des Amins mit der Epoxygruppe nicht stören und auch nicht zu einer Gelierung der Reaktionsmischung führen.

Die für die Wasserverdünnbarkeit und elektrische Abscheidung erforderlichen Ladungen können durch Protonisierung mit wässerlöslichen Säuren (z.B. Borsäure, Ameisensäure, Milchsäure, Propionsäure, Suttersaüre, Salzsäure, Phosphorsäure, Schwefelsäure, Kohlensäure, bevorzugt Essigsäure) oder auch durch Umsetzung der Oxirangruppen mit Salzen eines Amins oder einer Sulfid/Säure- oder Phosphin/Säure-Mischung erzeugt werden.

Als Salz eines Amins kann das Salz eines tertiären Amins verwendet werden.

Der Aminanteil des Amin-Säuresalzes ist ein Amin, das unsubstituiert oder substituiert wie im Falle des Hydroxylamins sein kann, wobei diese Substituenten die Umsetzung des Amin-Säuresalzes mit dem Polyepoxid nicht stören sollen und die Reaktionsmischung nicht gelieren soll. Bevorzugte Amine sind tertiäre Amine, wie Dimethylethanolamin, Triethylamin, Trimethylamin, Triisopropylamin und dergleichen. Beispiele von anderen geeigneten Aminen sind in der US—PS 3 839 252 in Spalte 5, Zeile 3 bis Spalte 7, Zeile 42 angegeben.

Die Amin-Säuresalzmischung wird durch Umsetzung des Amins mit der Säure in bekannter Weise erhalten. Es können auch Amin-Säuremischungen verwendet werden, obwohl sie in der Regel unter Bildung des Säuresalzes reagieren.

Eine Umsetzung der Oxirangruppen mit einem Sulfid in Gegenwart einer säure führt zu Harzen mit Sulfoniumgruppen.

Als Sulfide können beliebige Sulfide verwendet werden, die mit Epoxygruppen reagieren und keine Gruppen enthalten, die die Umsetzung stören. Das Sulfid kann ein aliphatisches, gemischtes aliphatisch aromatisches, aralkylisches oder cyclisches Sulfid sein. Beispiele von solchen Sulfiden sind Dialkylsulfide, wie Diethylsulfid, Dipropylsulfid, Dibutylsulfid, Dihexylsulfid oder Alkylphenylsulfide, wie Diphenylsulfid, Ethylphenylsulfid, alicyclische Sulfide, wie Tetramethylensulfid, Pentamethylensulfid, Hydroxyalkylsulfide, wie Thiodiethanol, Thiodipropanol, Thiodibutanol und dergleichen.

Als Säure kann eine beliebige Säure verwendet werden, die ein tertiäres Sulfoniumsalz bildet. Bevorzugt ist die Säure aber eine organische Carbonsäure. Beispiele von geeigneten Säuren sind Borsäure, Ameisensäure, Milchsäure, Essigsäure, Propionsäure, Buttersäure, Salzsäure, Phosporsäure und Schwefelsäure. Die Säure hat bevorzugt eine Dissoziationskonstante von größer als etwa $1 \times 10^{-5}$.

Des Verhältnis von Sulfid zu Säure ist nicht besonders kritisch. De ein Äquivalent Säure für die Bildung eines Mols einer Sulfoniumgruppe verwendet wird, wird bevorzugt mindestens ein Äquivalent Säure für jedes gewünschte Mol der Umwandlung von Sulfid zu Sulfonium verwendet.

Eine Umsetzung der Oxirangruppen mit einem Phosphin in Gegenwart einer Säure führt zu Harzen mit Phosphoniumgruppen.

Das verwendete Phosphin kann ein beliebiges Phosphin sein, des keine störenden Gruppen enthält. Beispiele solcher Phosphine sind aliphatische, aromatische oder alicyclische Phosphine, wobei als spezifische Beispiele folgende Phosphine genannt seien:

Niedrige Trialkylphosphine, wie Trimethylphospin, Triethylphosphin, Tripropylphosphin, Tributylphosphin, gemischte niedrige Alkylphenylphosphine, wie Phenyldimethylphosphin, Phenyldiethylphosphin, Phenyldipropylphosphin, Diphenylmethylphosphin, Diphenylethylphosphin,

Diphenylpropylphosphin, Triphenyphosphin, alicyclische Phosphine, wie Tetramethylenethylphosphin und dergleichen.

Die verwendete Säure kann eine beliebige Säure sein, die ein quaternäres Phosphoniumsalz bildet. Bevorzugt ist die Säure aber eine organische Carbonsäure. Beispiele von geeigneten Säuren sind Borsäure, Milchsäure, Ameisensäure, Essigsäure, Propionsäure, Buttersäure, Salzsäure, Phosphorsäure und Schwefelsäure.

Die Säure soll bevorzugt eine Dissoziationskonstante von größer als etwa $10^{-5}$ haben.

Das Verhältnis von Phosphin zur Säure ist nicht besonders kritisch. Da ein Äquivalent Säure zur Bildung von einem Mol Phosphoniumgruppe erforderlich ist, wird bevorzugt mindestens stwa ein Äquivalent Säure für jedes Mol der gewünschten Umwandlung von Phosphin zu Phosphonium verwendet.

Die als Komponente D geeigneten polyfunktionellen Alkohole, Polycarbonsäuren, Polyamine oder Polysulfide haben ein Molekulargewicht von 300 bis 3 500, bevorzugt von 350 bis 1 000.

Die bei der Erfindung in Betracht kommenden Polyole schließen Diole, Triole und höhere polymere Polyole wie Polyesterpolyole, Polyetherpolyole ein.

Für die Komponente D geeignete Polyalkylenetherpolyole entsprechen der allgemeinen Formel:

$$H - \left[ O\,(CHR)_n \right]_m - OH$$

in der R = Wasserstoff oder ein niedriger Alkylrest, gegebenenfalls mit verschiedenen Substituenten, ist, n = 2 bis 6 und m = 3 bis 50 oder noch höher ist. Beispiele sind Poly(oxytetramethylen)glykole und Poly(oxyethylen)glykole.

Die bevorzugten Polyalkylenetherpolyole sind Poly(oxytetramethylen)glykole mit einem Molekulargewicht im Bereich von 350 bis 1 000.

Polyesterpolyole können ebenfalls als polymere Polyolkomponente (Komponente D) bei der Erfindung verwendet werden. Mann kann die Polyesterpolyole durch Polyveresterung von organischen Polycarbonsäuren oder ihren Anhydriden mit organischen Polyolen, die primäre Hydroxylgruppen enthalten, herstellen. Üblicherweise sind die Polycarbonsäuren und die Polyole aliphatische oder aromatische Dicarbonsäuren und Diole.

Die zur Herstellung der Polyester verwendeten Diole schließen Alkylenglykole wie Ethylenglykol, Butylenglykol, Neopentylglykol und andere Glykole wie Cyclohexandimethanol ein.

Die Säurekomponente des Polyesters besteht in erster Linie aus niedermolekularen Carbonsäuren oder ihren Anhydriden mit 2 bis 18 Kohlenstoffatomen im Molekül. Geeignete Säuren sind beispielsweise Phthalsäure, Isophthalsäure, Terephthalsäure, Tetrahydrophthalsäure, Hexahydrophthalsäure, Adipinsäure, Azelainsäure, Sebazinsäure, Maleinsäure und Glutarsäure. Anstelle dieser Säuren können auch ihre Anhydride, soweit diese existieren, verwendet werden.

Ferner lassen sich bei der Erfindung auch Polyesterpolyole, die sich von Lactonen ableiten, als Komponente (D) benutzen. Diese Produkte erhält man durch die Umsetzung eines ε-Caprolactone mit einem Polyol. Solche Produkte sind in der US—PS 3 169 945 beschrieben.

Die Polylactonpolyole, die man durch diese Umsetzung erhält, zeichnen sich durch die Gegenwart einer endständigen Hydroxylgruppe und durch wiederkehrende Polyesteranteile, die sich von dem Lacton ableiten, aus. Diese wiederkehrenden Molekülanteile können der Formel

$$-\overset{\overset{\displaystyle O}{\|}}{C}-(CHR)_n-CH_2O-$$

entsprechen, in der n mindestens 4, bevorzugt 4 bis 6, ist und der Substituent Wasserstoff, ein Alkylrest, ein Cycloalkylrest oder ein Alkoxyrest ist.

In einer weiteren vorteilhaften Ausgestaltung der Erfindung werden langkettige Dicarbonsäuren eingesetzt. Beispiele hierfür sind Dimerfettsäuren, wie etwa die dimere Linolsäure.

Geeignete Polyamine zur Elastifizierung kann man z.B. durch Umsetzung von primären Diaminen und Monoepoxiden darstellen. Die gebildeten sekundären, substituierten Diamine modifizieren die erfindungsgemäßen Epoxidharze in geeigneter Weise.

Als Komponente D können auch primär-tertiäre Diamine oder Alkanolamine wie Aminoethanol oder Aminopropanol verwendet werden.

Al polyfunktionelle SH-Verbindungen (Komponente D) kommen Umsetzungsprodukte von organischen Dihalogeniden mit Natriumpolysulfid in Betracht. Weitere SH-Verbindungen sind z.B. Umsetzungsprodukte von hydroxylgruppenhaltigen linearen Polyestern, Polyethern oder Polyurethanen mit Mercaptocarbonsäuren wie Mercaptoessigsäure, 2-Mercaptopropionsäure, 3-Mercaptopropionsäure, Mercaptobuttersäure und ähnliche.

Als Komponente (D) geeignete Polyphenol entsprechen der oben erläuterten allgemeinen Formel (I)

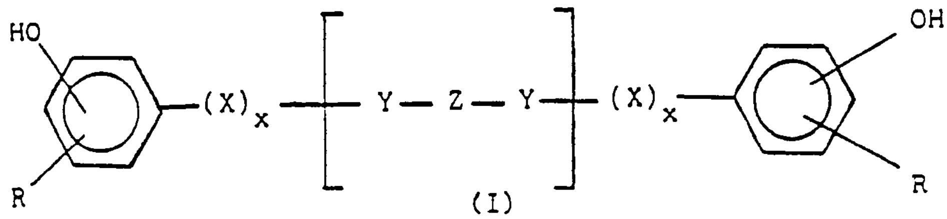

(I)

Diese Komponente (D) kann zum Beispiel vorteilhaft auf folgende Weise hergestellt werden. Ein Mol eines höhermolekularen Diols, z.B. eines Polyesterdiols, eines Polycaprolactondiols, eines Polyetherdiols, eines Polycarbonatdiols oder dergleichen, wird mit zwei Molen einer Hydroxyphenylcarbonsäure verestert oder mit zwei Molen eines Hydroxyphenylcarbonsäureesters umgesetzt. Geeigente Hydroxycarbonsäuren sind p-Hydroxybenzoesäure, p-Hydroxyphenylessigsäure und 3-(4-Hydroxphenyl-)propionsäure oder deren Ester. Wird das Anhängen der Hydroxyphenylgruppe durch Umesterung durchgeführt, kann man auch eine basische Umesterung durchführen und hierzu die Alkaliphenolate der entsprechenden Hydroxyphenylcarbonsäureester einsetzen. Nach Reaktionsende muß das Produkt sauer aufgearbeitet werden, um das gewünschte Polyphenol zu erhalten.

Zur direkten Veresterung kann zum Beispiel auch N-(4-Hydroxyphenol-)glycin eingesetzt werden. In einer weiteren Variante können beliebige, saure Polyester mit p-Hydroxyanilin zu den erwünschten Polyphenolen umgesetzt werden.

In einer anderen vorteilhaften Ausgestaltung werden Polyetherdiamine oder ähnliche Polyamine mit z.B. 4-Hydroxy-3-meth-oxybenzaldehyd zu den Polyphenolen umgesetzt.

Die erfindungsgemäß hergestallten Sindemittel können nach an sich bekannten Methoden durch Zusatz von Vernetzungsmitteln vernetzt bzw. durch chemische Modifikation in selbstvernetzende Systeme überführt werden. Ein selbstvernetzendes System kann zum Beispiel dadurch erhalten werden, daß des Bindemittel mit einem teilblockierten Polyisocyanat, das im Durchschnitt eine freie Isocyanatgruppe pro Molekül besitzt und dessen blockierte Isocyanatgruppen erst bei erhöhten Temperturen entblockt werden, umgesetzt wird.

Als Vernetzungsmittel eignen sich praktisch alle mit Oxirangruppen reagierende, mindestens bifunktionelle Verbindungen wie zum Beispiel Polyalkohole, Polyphenole, Polycarbonsäuren, Polycarbonsäureanhydride und -amide, Polyamine, Polyisocyanate, Phenoplaste, usw.

Die Vernetzungsmittel werden in der Regel in einer Menge von 5 bis 60, bevorzugt 20 bis 40 Gew.-% bezogen auf des Bindemittel eingesetzt.

Häufig angewandet Methoden zu Vernetzung von Bindemitteln sind zum Bespiel in folgenden Patentdokumenten publiziert: GB 13,03 480, europäische Patentanmeldung 12 463, US—PS 4,252,703 und GB 15 57 516.

Beispiele für geeignete Aminoplastvernetzungsmittel sind dar Hexamethylether von Hexamethylolmelamin, der Triethyltrimethylether von Hexamethylolmelamin, der Hexabutylether von Hexamethylolmelamin und der Hexamethylether von Hexamethylolmelamin und polymere butylierte Melaminformaldehydharze. Ebenso verwendbar sind alkylierte Harnstofformaldehydharze.

Als Verbetzungsmittel werden bevorzugt blockierte Polyisocyanate eingesetzt. Es können bei der Erfindung beliebige Polyisocyanate benutzt werden, bei denen die Isocyanatgruppen mit einer Verbindung umgesetzt worden sind, so daß das gebildete blockierte Polyisocyanat gegenüber Hydroxylgruppen bei Raumtemperatur beständig ist, bei erhöhten Temperaturen, in der Regel im Bereich von etwa 90 bis etwa 300°C, aber reagiert. Bei der Herstellung der blockierten Polyisocyanate können beliebige für die Vernetzung geeignete organische Polyisocyanate verwendet werden. Bevorzugt sind die Isocyanate, die etwa 3 bis etwa 36, insbesondere etwa 8 bis etwa 15 Kohlenstoffatome enthalten. Beispiele geeigneter Diisocyanate sind Trimethylendiisocyanat, Tetramethylendiisocyanat, Pentamethylendiisocyanat, Hexamethylendiisocyanat, Propylendiisocyanat, Ethylethylendiisocyanat, 2,3-Dimethylethylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylendiisocyanat, 2,6-Toluylendiisocyanat, 4,4'-Diphenylendiisocyanat, 1,5-Naphthylendiisocyanat, 1,4-Naphthylendiisocyanat, 1-Isocyanatomethyl-5-isocyanato-1,3,3-trimethylcyclohexan, bis(4-Isocyanatocyclohexyl)methan, bis(4-Isocyanatophenyl)methan, 4,4'-Diisocyanatodiphenylether und 2,3-bis(8-Isocyanatooctyl)-4-octyl-5-hexylcyclohexen. Es können auch Polyisocyanate von höherer Isocyanatfunktionalität verwendet werden. Beispiele dafür sind tris(4-Isocyanatophenyl)methan, 1,3,5-Triisocyanatobenzol, 2,4,6-Triisocyantotoluol, 1,3,5-tris(6-Isocyanatohexylbiuret, bis (2,5-Diisocyanato-4-methylphenyl)methan, und polymere Polyisocyanate, wie Dimere und Trimere von Diisocyanatotoluol. Ferner kann man auch Mischungen von Polyisocyanaten benutzen. Die bei der Erfindung als Vernetzungsmittel in Betracht kommenden organischen Polyisocyanate können auch Präpolymere sein, die sich beispielsweise von einem Polyol einschließlich eines Polyetherpolyols oder eines Polyesterpolyols ableiten.

Für die Blockierung der Polyisocyante können beliebige geeignete aliphatische, cycloaliphatische oder

aromatische Alkylmonoalkohole verwendet werden. Beispiele dafür sind aliphatische Alkohole, wie Methyl-, Ethyl-, Chlorethyl-, Propyl-, Butyl-, Amyl-, Hexyl-, Heptyl-, Octyl-, Nonyl-, 3,3,5-Trimethylhexyl-, Decyl- und Lauryalkohol; cycloaliphatische Alkohole wie Cyclopentanol und Cyclohexanol; aromatische Alkylalkohole, wie Phenylcarbinol und Methylphenylcarbinol.

Andere geeignete Blockierungsmittel sind Hydroxylamine wie Ethanolamin, Oxime wie Methylethylketonoxim, Acetonoxim und Cyclohexanonoxim oder Amine wie Dibutylamin und Diisopropylamin. Die genannten Polyisocyanate und Blockierungsmittel können bei geeigneten Mengenverhältnissen auch zur Herstellung der oben beschriebenen teilblockierten Polyisocyanate verwendet werden.

Den unter Verwendung der erfindungsgemäßen Bindemittel hergestellten wäßrigen Überzugszusammensetzungen können allgemein übliche Zusätze wie zum Beispiel koaleszierende Lösungsmittel, Pigmente, oberflächenaktive Mittel, Vernetzungskatalysatoren, Antioxidantien, Füllstoffe und Antischaummittel zugegeben werden.

Die mit Hilfe der erfindungsgemäßen Bindemittel zubereiteten wäßrigen Systeme sind insbesondere für das kationische Elektrotauchlackierverfahren geeignet; sie können aber auch in konventionellen Beschichtungsverfahren eingesetzt werden. Als Beschichtungssubstrate können zur Beispiel gegebenenfalls vorbehandelte Metalle wie Eisen, Stahl, Kupfer, Zink, Messing, Magnesium, Zinn, Nickel, Chrom und Aluminium aber auch imprägniertes Papier und andere elektrisch leitende Substrate benutzt werden.

Die erfindungsgemäßen Bindemittel eignen sich auch zur Herstellung von Pigmentpasten, das heißt, daß die Bindemittel auch als Reibharze eingesetzt werden können.

Bei der Verbindung das Harzes gemäß der Erfindung als Reibharz für die Herstellung einer Pigmentpaste werden die Mengenverhältnisse des epoxyhaltigen organischen Materials und des organischen tertiären Amins, die miteinander umgesetzt werden, bevorzugt so ausgewählt, daß das Trägerharz 0,8 bis 2,0 Stickstoffatome pro Molekül enthält. Geringere Mengen an quaternärem Stickstoff können zu einer schlechten Benetzbarkeit des Pigments führen, wogegen höhere Mengen zur Folge haben, daß die Harze zu wasserlöslich sind.

Man stellt Pigmentpasten nach der Erfindung her, indem man ein Pigment in demReibharz in gut bekannter Weise zerkleinert oder dispergiert. Die Pigmentpaste enthält als wesentliche Bestandteile das Reibharz und mindestens ein Pigment.

Außerdem können aber in der Pigmentzusammensetzung noch andere übliche Zusatzstoffe vorhanden sein, wie Weichmacher, Netzmittel, oberflächenaktive Mittel oder Entschäumer.

Die Anreibung der Pigmente erfolgt in der Regel in Kugelmühlen, Sandmühlen, Cowles-Mühlen und kontinuierlichen Mahlvorrichtungen bis das Pigment auf die gewünschte Teilchengröße zerleinwert worden ist und bevorzugt durch das Harz benetzt bzw. darin dispergiert worden ist. Nach dem Zerkleinern sollte die Teilchengröße des Pigments im Bereich von 10 Mikron oder weniger liegen. Im allgemeinen wird auf eine Hegman-Feinheit von etwa 6 bis 8 zerkleinert. Bevorzugt wird die Anreibung in einer wäßrigen Dispersion des Reibharzes durchgeführt. Die in der anzureibenden Masse anwesende Wassermenge sollte ausreichend sein, um eine kontinuierliche wäßrige Phase zu bilden.

Als Pigment können bei der Erfindung die gut bekannten Pigmente benutzt werden. Im allgemeinen ist Titandioxid das einzige oder das hauptsächliceh weiße Pigment. Andere weiße Pigmente oder Streckmittel, wie Antimonooxid, Zinkoxid, basisches Bleicarbonat, basisches Bleisulfat, Bariumcarbonat, Porzellan, Ton, Calciumcarbonat, Aluminiumsilicat, Siliciumdioxid, Magnesiumcarbonat und Magnesiumsilicat können aber auch verwendet werden. Als farbige Pigmente können beispielsweise Cadmiumgelb, Cadmiumrot, Ruß, Phthalocyaninblau, Chromgelb, Toluidinrot und hydratisiertes Eisenoxid benutzt werden. Wegen weiteren allgemeinen Hinweisen auf die Zerkleinerung von Pigmenten und die Formulierung von Anstrichmassen wird auf folgende Bücher verwiesen: D. H. Parker, Principles of Surface Coating Technology, Interscience Publishers, New York (1965); R. L. Yates, Elektropainting, Robert Draper Ltd., Teddington, England (1966); H. F. Payne, Organic Coating Technology, Band 2, Wiley and Sons, New York (1961).

Die modifizierten Epoxidharze sollten möglichst problemlos im industriellen Maßstab hergestellt werden können.

Die Erfindung betrifft auch ein Verfahren zur Herstellung von wasserverdünnbaren Bindemitteln für kationische Elektrotauchlacke auf der Basis von modifizierten Epoxidharzen, die Ammonium-, Sulfonium- und/oder Phosphoniumgruppen tragen.

Sowohl beim Aufbau als auch bei der Modifizierung von Epoxidharzen werden Epoxidgruppen unter Bildung von sekundären Hydroxylgruppen geöffnet. Die so gebildeten sekundären OH-Gruppen können wiederum en eine Epoxidgruppe addiert werden, wobei eine Etherbindung und eine neue sekundäre Hydroxylgruppe enstehen.

Bei der industriellen Prokuktion von modifizierten Epoxidharzen treten Schwierigkeiten auf, wenn es nicht gelingt, die Reaktion durch geeignete Wahl der Umsetzungsbedingungen so zu kontrollieren, daß genügend viele reaktionsfähige Epoxidgruppen zur Durchführung der arwünschten Modifizierungsreaktionen zur Verfügung stehen und daß keine Harze mit zu hoher Viskosität bzw. unbrauchbare Gelle als Reaktionsprodukte erhalten werden.

Bisher versuchte man, die oben erläuterten Produktionsschwierigkeiten durch eine möglichst

weitgehende Unterdrückung der Reaktion zwischen sekundären Hydroxylgruppen und Epoxidgruppen zu vermeiden.

So wurde zum Beispiel vorgeschlagen, die Gelbildungstendenz während der Herstellun von modifizierten Epoxidharzen durch Kettenverlängerung mit organischen Polyolen, die mindestens zwei alkoholische primäre OH-Gruppen tragen (US—PS 4,104,147), bzw. Polymercaptoverbindungen (US—PS 4,260,720) gering zu halten. Hierbei sollen Reaktionen zwischen den sekundären Hydroxylgruppen und Epoxidgruppen durch Umsetzungen zwischen den gegenüber Epoxidgruppen reaktivieren alkoholischen primären OH-Gruppen bzw. Mercaptogruppen und Epoxidgruppen zurückgedrängt werden.

Eine weitere Aufgabe der vorliegenden Erfindung bestand darin, neue Synthesewege zum Aufbau von modifizierten Epoxidharzen zu finden, bei denen die oben beschriebenen Produktionsschwierigkeiten nicht auftreten.

Diese Aufgabe wurde überraschenderweise dadurch gelöst, daß die modifizierten Epoxidharze durch ein Verfahren hergestellt werden, das durch gekennzeichnet ist, daß

(A) ein Diglycidylether eines Polyphenols oder ein Diglycidylether eines mehrwertigen Alkohols oder ein Diglyciylester einer Polycarbonsäure oder eine Diepoxidverbindung, die durch Epoxidierung einer olefinisch ungesättigten alicyclischen Verbindung erhältlich ist, oder einem Gemisch von solchen Diepoxidverbindungen, wobei das Epoxidäquivalentgewicht der Diepoxidverbindungen unter 2000 liegt, mit

(B) einer Verbindung der allgemeinen Formel $R^1$—OH, wobei $R^1$ folgende Bedeutung haben kann

$R^1$ = Aryl oder $R^2$ 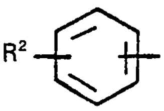

$R^2$ = H, Alkyl (bevorzugt mit 1 bis 20 C-Atomen, besonders bevorzugt t-Butyl, Nonyl, Dodecyl), $R^3$—O— (bevorzugt in p-Stellung zur phenolischen OH-Gruppe) mit $R^3$ = Alkyl (bevorzugt mit 1 bis 10 C-Atomen, besonders bevorzugt Methyl) oder $HO—(—CHR^4CH_2—O—)_n—CHR^4CH_2—$ mit n = 0—10 und $R^4$ = H oder Methyl,

oder eine Verbindung der allgemeinen Formel $R^5$—SH, wobei $R^5$ folgende Bedeutung haben kann

$R^5$ = Alkyl (bevorzugt mit 1 bis 20 C-Atomen, besonders bevorzugt n-Butyl, Dodecyl), Cycloalkyl (bevorzugt Cyclohexyl), Aryl (besonders bevorzugt Phenyl), Aralkyl (besonders bevorzugt Benzyl), $R^6—OOC—CH_2—$, $R^7—OOC\ CH_2CH_2—$ $R^6$, $R^7$ = Alkyl mit 1 bis 8 C-Atomen, bevorzugt Butyl, 2 Ethyl-hexyl, oder einem Gemisch aus solchen Verbindungen und

(C) primären und/oder sekündaren Aminen oder deren Salzen und/oder dem Salz eines tertiären Amins, einer Sulfid/Säure- oder Phosphin/Säuremischung oder einem Gemisch aus diesen Verbindungen umgesetzt wird, wobei die Komponenten A und B in einem Molverhältnis von 10:1 bis 1:1, bevorzugt 4:1 bis 1,5:1 eingesetzt werden, die Umsetzung der Komponente A mit der Komponente B bei 100 bis 190°C gegebenenfalls in Anwesenheit eines Katalysators durchgeführt und die Wasserverdünnbarkeit gegebenenfalls durch Protonisierung mit einer wasserlöslichen Säure erreicht wird.

Bei dem erfindungsgemäßen Verfahren kann die Zahl der gebildeten sekündaren Hydroxylgruppen in einfacher Weise über das Molverhältnis der eingesetzten Komponenten A und B und die Wahl der Reaktionsbedingungen so gesteuert werden, daß die oben erörterten Produktionsschwierigkeiten nicht auftreten und die sonst als gefürchtete Nebenreaktionen ablaufende Umsetzung zwischen sekündaren Hydroxylgruppen und Epoxidgruppen nun gezielt als Hauptreaktion zum Harzaufbau genutzt werden kann.

Es wird vermutet, daß der Harzaufbau gemäß folgendem Reaktionsschema zu seitengruppehaltigen Epoxidharzen führt.

1. Schritt: Die monofuktionell reagierende Phenol- bzw. Thiolverbindung R'XH öffnet einen Oxiranring X = O oder S

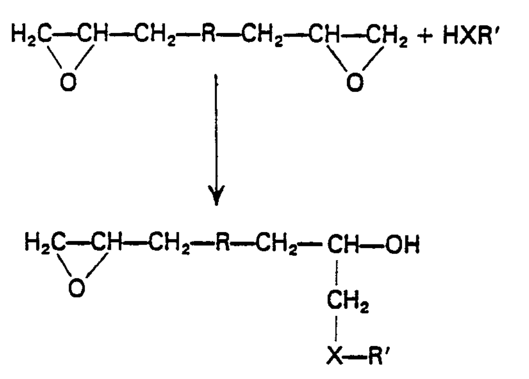

2. Schritt: Die im ersten Schritt gebildete sekundäre Hydroxylgruppe wird an eine weitere Epoxidgruppe addiert

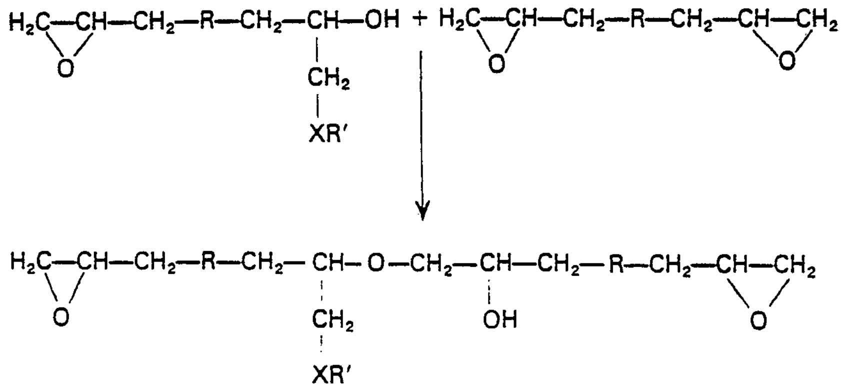

Das erfindungsgemäße Verfahren wird wie folgt durchgeführt:

Komponente A und Komponente B werden gemischt und — gegebenenfalls in Anwesenheit von Katalysatoren wie zum Beispiel tertiären Aminen — bei Temperaturen zwischen 100° und 190°C, vorzugsweise 115° und 185°C, vollständig umgesetzt. (Die Vollständigkeit des Umsatzes kann über Epoxidäquivalentgewichtsbestimmungen kontrolliert werden.) Das so erhaltene Reaktionsprodunkt kann dann mit der Komponente C und gegebenenfalls auch noch mit der Komponente D weiter modifiziert werden. Die Reaktion mit der Komponente D kann auch vor der Umsetzung mit Komponente C erfolgen.

Die Reaktion zwischen Aminen und epoxidgruppenhaltigen Verbindungen springt haüfig schon beim Vermischen der Reaktionspartner an. Je nach gewünschtem Reaktionsverlauf — vor allem zur Vervollständigung der Umsetzung — ist se empfehlenswert, die Reaktionstemperatur auf 50° bis 150°C zu erhöhen.

Für die Umsetzung mit der epoxyhaltigen Verbindung sollte mindestens eine solche Menge an Amin verwendet werden, daß das Harz einen kationischen Charakter annimmt, d.h. daß es unter dem Einfluß einer Spannung in dem Beschichtungsbad zu der Kathode wandert, wenn es durch Zugabe einer Säure wasserverdünnbar gemacht worden ist. Es können im wesentlichen alle Epoxygruppen des Harzes mit einem Amin umgesetzt werden. Es ist aber auch möglich, überschüssige Epoxygruppen in dem Harz zu belassen.

Eine weitere Möglichkeit, die erforderliche Wasserdispergierbarkeit zu erzielen, besteht darin, Mannich-Besen, d.h. Umsetzungsprodukte geeigneter, zur Reaktion mit einem Epoxidring geeignete Gruppen tragender Phenole mit Formaldehyd und einem sekundären Amin, zu verwenden. Hierdurch wird des Bindemittel gleichzeitig selbstvernetzbar.

Die Umsetzung mit Amin-Säuresalzen wird bei Temperaturen von 20° bis 100°C vorgenommen. Die Reaktion ist ohne Zugabe von Lösungsmitteln durchführbar, bei Anwesenheit von Lösungsmitteln wie aromatischen Kohlenwasserstoffen oder Monoalkylethern von Ethylenglykol aber leichter steuerbar.

Das Verhältnis zwischen dem Amin-Säuresalz und der Epoxyverbindung kann schwanken und die optimalen Verhältnisse hängen von den speziellen Ausgangstoffen ab. Im allgemeinen können etwa 1 bis etwa 50 Gewichtsteile Salz auf 100 Gewichtsteile Polyepoxid verwendet werden. Im allgemeinen wird des Verhältnis in Abhängigkeit von dem sich von Quaternisierungsmittel ableitenden Stickstoffgehalt gewählt, der typischerweise etwa 0,05 bis etwa 16%, bezogen auf das Gesamtgewicht des Aminsalzes und des Polyepoxides ausmacht.

Die Sulfid/Säuremischung und die Epoxidverbindung werden umgesetz, indem man die Komponenten michst und in der Regel auf mäßig erhöhte Temperaturen, wie 70° bis 110°C, erwärmt. Ein Lösungsmittel ist nicht notwendig, obwohl häufig eines verwendet wird, um eine bessere Kontrolle der Reaktion zu erreichen. Geeignete Lösungsmittel sind aromatische Kohlenwasserstoffe, Monoalkylether von Ethylenglykol und aliphatische Alkohole. Die Mengeanteile des Sulfids und der Epoxidverbindung können variiert werden, und die optimalen Verhältnisse der beiden Komponenten hängen von den speziellen Ausgangsstoffen ab. Üblicherweise werden aber etwa 1 bis 50 Gewichtsteile Sulfid auf 100 Gewichtsteile der Epoxyverbindung verwendet. Die Mengenverhältnisse werden häufig auf den Gehalt an Schwefel bezogen, der typischerweise bei etwa 0,1 bis 35%, bezogen auf das Gesamtgewicht des Sulfids und der Epoxyverbindung, liegt.

Die Phosphin/Säuremischung und die Epoxidverbindung werden umgesetzt, indem die Komponenten gemischt werden, wobei manchmal auf mäßig erhöhte Temperturen erwärmt wird. Die Reaktionstemperatur ist nicht besonders kritisch, und sie wird in Abhängigkeit von den Ausgangsstoffen und ihren Reaktionsgeschwindigkeiten gewählt. Häufig verläuft die Reaktion bei Raumtemperatur oder bei bis auf 70°C erhöhten Temperaturen befriedigend schnell. In manehen Fällen ist es ratsam, höhere Temperaturen wie von etwa 110°C oder höher zu verwenden. Ein Lösungmittel ist nicht notwendig, obwohl es häufig zur besseren Kontrolle der Reaktion verwendet werden kann. Beispiele für geeignete Lösungsmittel sind aromatische Kohlenwasserstoffe, Monoalkylether von Ethylenglykol und aliphatische

Alkohole. Die Mengenanteile des Phosphins und der Epoxidverbindung können variiert werden, und die optimalen Anteile hängen von den speziellen Ausgangsstoffen ab. Üblicherweise werden aber etwa 1 bis etwa 50 Gewichtsteile Phosphin auf 100 Gewichsteile der Epoxidverbindung verwendent. Die Mengenanteile werden häufig unter Bezugnahme auf den Anteil an Phosphin angegeben, wobei typischerweise etwa 0,1 bis etwa 35 Gew.-% Phosphin, bezogen auf das Gesamtgewicht von Phosphin und Epoxidverbindung verwendet werden.

Die Modifizierung mit der Komponente D wird bei Reaktionstemperaturen von 80 bis 170°C durchgeführt. Der Verlauf der Umsetzung des aus den Komponenten A und B hergestellten Epoxidharzes mit den Komponenten C und gegebenenfalls D kann durch jeweilige Bestimmung des Epoxidäquivalentgewichtes verfolgt werden.

Vorteilhafte Ausgestaltungen des erfundungsgemäßen Verfahrens ergeben sich aus den Ansprüchen 8 bis 14.

Die Erfindung betrifft auch ein Verfahren zum elektrophoretischen Beschichten eines als Kathode geschalteten elektrisch leitenden Substrates in einem wäßrigen Bad, das neben üblichen Zusätzen wasserverdünnbare, kationische Bindemittel, die entweder durch Umsetzung mit einem teilblockierten Polyisocyanat selbstvernetzbar gemacht worden sind oder durch im Bad vorhandene Vernetzungsmittel vernetzt werden können, enthält, und dadurch gekennzeichnet ist, daß die Bindemittel durch eine Umsetzung von

(A) einem Diglycidylether eines Polyphenols oder einem Diglycidylether eines mehrwertigen Alkohols oder einem Diglycidylester einer Polycarbonsäure oder einer Diepoxidverbindung, die durch Epoxidierung einer olefinisch ungesättigten alicyclischen Verbindung erhältlich ist, oder einem Gemisch von solchen Diepoxidverbindungen, wobei das Epoxidäquivalentgewicht der Diepoxidverbindungen unter 2000 liegt, mit

(B) einer Verbindung der allgemeinen Formel $R^1$—OH, wobei $R^1$ folgende Bedeutung haben kann

$R^1$ = Aryl oder $R^2$ 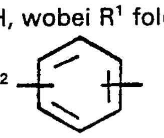

$R^2$ = H, Alkyl (bevorzugt mit 1 bis 20 C-Atomen, besonders bevorzugt t-Butyl, Nonyl, Dodecyl), $R^3$—O— (bevorzugt in p-Stellung zur phenolischen OH-Gruppe) mit $R^3$ = Alkyl (bevorzugt mit 1 bis 10 C-Atomen, besonders bevorzugt Methyl) oder $HO—(—CHR^4CH_2—O—)_n—CHR^4CH_2—$ mit n = 0—10 und $R^4$ = H oder Methyl,

oder einer Verbindung der allgemeinen Formel $R^5$—SH, wobei $R^5$ folgende Bedeutung haben kann $R^5$ = Alkyl (bevorzugt mit 1 bis 20 C-Atomen, besonders bevorzugt n-Butyl, Dodecyl), Cycloalkyl (bevorzugt Cyclohexyl), Aryl (besonders bevorzugt Phenyl), Aralkyl (besonders bevorzugt Benzyl), $R^6—OOC—CH_2—$, $R^7—OOCCH_2\ CH_2—$ $R^6$, $R^7$ = Alkyl mit 1 bis 8 C-Atomen, bevorzugt Butyl, 2 Ethyl-hexyl,

oder einem Gemisch aus solchen Verbindungen und

(C) primären und/oder sekündaren Aminen oder deren Salzen und/oder dem Salz eines tertiären Amins, einer Sulfid/Säure- oder Phosphin/Säuremischung oder einem Gemisch aus diesen Verbindungen erhältich sind, wobei die Komponenten A und B in einem Molverhältnis von 10:1 bis 1:1, bevorzugt 4:1 bis 1,5:1 eingesetzt werden, die Umsetzung der Komponente A mit der Komponente B bei 100 bis 190°C gegebenenfalls in Anwesenheit eines Katalysators durchgeführt und die Wasserverdünnbarkeit gegebenenfalls durch Protonisierung mit einer wasserlöslichen Säure erreicht wird.

Bei der kationischen Abscheidung werden die zu überziehenden Gegenstände in eine wäßrige Dispersion des solubilisierten filmbildenden kationischen Bindemittels eingetaucht. Es wird eine elektrische Spannung zwischen dem zu überziehenden Gegenstand, der als Kathode dient, und einer Anode angelegt und das kationische Bindemittel wird durch den elektrischen Strom auf der Kathode abgeschieden. Der Gegenstand wird dann aus dem Bad entnommen und in der Regel abgespüllt. Dann wird der Überzug in üblicher Weise durch Erwärmen ausgehärtet.

Die Erfindung wird in den folgenden Beispielen näher erläutert. Alle Angaben über Teile und Prozentsätze sind Gewichtsangaben, falls nicht ausdrücklich etwas anderes festgestellt wird.

Darstellung eines Vernetzers I

Gemäß der DE—OS 27 01 002, Beispiel 1, wird ein geblockter Isocyanatvernetzer (Polyurethanevernetzer) hergestellt, indem 218 Teile 2-Ethylhexanol langsam zu 291 Teilen einer 80/20-Isomermischung von 2,4-/2,6-Toluylendiisocyanat unter Rühren und in einer Stickstoffatmosphäre gegeben werden, wobei die Reaktionstemperatur durch äußere Kühlung unter 38°C gehalten wird. Der Ansatz wird noch eine weitere halbe Stunde bei 38°C gehalten und dann auf 60°C erwärmt, wonach 75 Teile Trimethylolpropan und anschließend 0,08 Teile Dibutylzinndilaurat als Katalysator zugegeben werden. Nach einer exothermen Reaktion zu Beginn wird der Ansatz 1,5 Stunden bei 121°C gehalten, bis im wesentlichen die gesamten Isocyanatgruppen verbraucht sind, was an dem Infrarotspektrum zu erkennen ist. Der Ansatz wird dann mit 249 Teilen Ethylenglykolmonoethylether verdünnt.

Darstellung eines Vernetzers II

Gemäß der EP 00 40 867 Beispiel 2d) wird ein Polyestervernetzer hergestellt: 192 Teile Trimellitsäureanhydrid und 500 Teile Versaticsäureglycidylester, mit einem Epoxidäquivalentgewicht von 250, werden vermischt und unter Rühren auf 100°C erwärmt. Es tritt eine exotherme Reaktion auf, und die

Temperatur steigt auf 190°C. Nach Abkühlen auf 140°C werden 2 Teile Benzyldimethylamin zugegeben. Die Mischung wird 3 Stunden bei 140°C gehalten. Es ensteht ein viskoses, klares Produkt, das zusätzlich mit 295 Teilen Ethylenglykolmonobutylether verdünnt wird.

Darstellung eines Vernetzers III

Ein Vernetzungsmittel, das vernetzungsaktive β-Alkoxyalkylestergruppen trägt, wird folgendermäßen hergestellt:

In einem wärmeträgerölbeheizbaren Reaktionsgefäß mit Wasserabscheider, Rückflußkühler und zwischengeschalteter Raschig-Kolonne werden 1462 g Hexylglkyol (10 mol) vorgelegt und unter Inertgaszufuhr und Rühren 1000 g Bernsteinsäureanhydrid (10 mol) eingetragen. Die Reaktionsmischung wird auf 120°C aufgeheizt, wobei die exotherme Wärmetönung die Temperatur kurzzeitig auf 130°C anhebt. Die Temperatur wird gehalten, bis die Säurezahl 230 mg KOH/g beträgt.

Anschließend werden 400 g Xylol, 5 g N-Cetyl-N,N,N-trimethylammoniumbromid und 940 g eines Bisphenol-A-Epoxidharzes mit einem Epoxidäquivalentgewicht von 188 (2,5 mm) zugegeben. Die Temperatur wird innerhalb von 1 Stunde wieder auf 130°C angehoben und dort gehalten, bis der Epoxidwert auf null abgesunken ist. Nach Zugabe von 2 g p-Toluolsulfonsäurelösung (25 %ig in n-Propanol) wird die Temperatur innerhalb von 4 Stunden auf 200°C gesteigert, während das entstandene Reaktionswasser kontinuierlich ausgekreist wird. Nach weiterer Stigerung auf 220°C wird die Temperatur gehalten, bis annähernd 90 g Wasser abgeschieden sind, und die Säurezahl auf unter 2 mg KOH/g Festharz abgesunken ist. Sodann wird gekühlt und ohne Verdünnung ausgetragen.

Festkörper: 95,2 Gew.-% (gemessen durch 1-stündiges Erhitzen auf 130°C)

Säurezahl: 1,1 mg KOH/g Festharz

Viskosität: 480 mPas (gemessen nach Verdünnen mit Methyl-Isobutylketon auf 70 Gew.-% bei 25°C)

Bindemittelherstellung

Des Epoxidharz (flüssiges Epoxidharz auf Basis Biphenol A mit einem Epoxidäquivalentgewicht-EEWvon 188) wird zusammen mit dem Phenol oder Thiol in einem geeigneten Reaktor vorgelegt und auf 160°C unter Stickstoffüberschleierung erhitzt. Man hält diese Temperatur bis das EEC I erreicht ist. Danach kühlt man durch Zusatz von Methylisobutylketon (MICH) und externe Kühlung auf 125°C ab und fügt denn Benzyldimethylamin zu. Dadurch steigt die Temperatur wieder leicht an und man hält sie bei 130°C bis des EEW II erreicht ist. Danach fügt man der Vernetzer zu und kühlt auf 90°C ab. Dann wird Ketimin (hergestellt aus Diethylentriamin und MIBK im Überschuß, so daß ein Aminäquivalentgewicht von 125 resultiert) und Diethanolamin zugegeben. Man hält 1 Stunde die Temperatur bei 110°C, gibt dann Propylenglykolmonophenylether zu und mischt 30 Minuten unter.

Inzwischen bereitet man aus entionisiertem Wasser ($H_2O$ I) und Eisessig des Dispergierbad vor. Hierein wird die Harzlösung dispergiert. Nach 30 Minuten fügt man Bleioctoat zu und mischt weitere 30 Minuten unter. Danach wird die weitere Mange Wasser ($H_2O$ II) zugesetzt und 15 Minuten eingerührt. Die Dispersion wird danach filtriert.

Darstellung einer grauen Pigmentpaste

Zu 953 Teilen eines handelsüblichen Epoxidharzes auf Basis Bisphenol A mit einem Epoxidäquivalentgewicht von 890 werden 800 Teile Butylglykol gegeben. Die Mischung wird auf 80°C erhitzt. In die Harzlösung werden dann 221 Teile eines Umsetzungsproduktes aus 101 Teilen Diethanolamin und 120 Teilen 80 %iger wässriger Milchsäure gegeben. Man führt die Reaktion bei 80°C durch bis die Säurezahl unter 1 gefallen ist.

1 800 Teile dieses Produkts werden mit 2 447 Teilen entisonisiertem Wasser vorgelegt und mit 2 460 Teilen $TiO_2$, 590 Teilen eines Extenders auf Basis Aluminiumsilikat, 135 Teilen Bleisilikat und 37 Teilen Ruß vermengt. Diese Mischung wird in einem Mahlaggregat auf eine Hegman -Feinheit von 5 bit 7 zerkleinert. Danach gibt man 1 255 Teile entionisiertes Wasser zu, um die gewünschte Pastenkonsistenz zu erreichen. Dise graue Paste ist sehr lagerstabil.

Zubereitung der Elektrotauchbäder I bis IV und Abschiedung von Lackfilmen

Jeweils 2 000 Gewichtsteile der oben beschriebenen Bindemitteldispersionen werden mit 775 Gewichtsteilen der grauen Pigmentpaste vermischt. Der Sadfestkörper wird mit entionisiertem Wasser auf 20% (150°C, 30') eingestellt. Man läßt dann das Bad 3 Tage unter Rühren altern. Die Abscheidung der Lackfilme erfolgt während 2 Minuten auf zinkphosphatiertem Blech. Die Badtemperatur beträgt hierbei 27°C. Die abgeschiedanen Films werden bei 180°C während 20 Minuten eingebrannt.

Einwagen für die Bindemittelherstellung

| | BM I | BM II | BM III | BM IV |
|---|---|---|---|---|
| Epoxidharz | 1162 | 1310 | 1379 | 1265 |
| Phenol/Thiol | t-Butylphenol 348 | Phenol 262 | Mercaptoessigsäuremethylester 324 | Thiophenol 278 |
| MIBK | 75 | 110 | 119 | 77 |
| Benzyldimethylamin | 8 | 7 | 10 | 8 |
| Vernetzer | 1062 Typ I | 963 Typ II | 598 Typ III | 945 Typ I |
| Diethanolamin | 120 | 109 | 96 | 132 |
| Ketimin | 144 | 94 | 82 | 114 |
| Propylenglykolmonophenylether | 123 | 159 | 122 | 318 |
| $H_2O$ I | 1370 | 1690 | 1510 | 1670 |
| Eisessig | 49 | 50 | 67 | 68 |
| Oleioctoat | 24 | 146 | 148 | 25 |
| $H_2O$ II | 2515 | 2100 | 2545 | 2100 |
| | | | | |
| EEW I | 385 | 370 | 385 | 360 |
| EEW II | 950 | 1080 | 1350 | 900 |
| Festkörper (2h, 110°C) | 34,8% | 35,7% | 35,3% | 34,9% |

BM = Bindemittel

Abscheideergebnisse

| | Bad I | Bad II | Bad III | Bad IV |
|---|---|---|---|---|
| Bindemitteldispersion | I | II | III | IV |
| Abscheidespannung (V) | 380 | 320 | 350 | 350 |
| Filmdicke (µm) | 21 | 18 | 23 | 20 |
| Umgriff nach FORD (cm) | 20,7 | 21,0 | 19,8 | 22,5 |
| Verlauf* | 0,5 | 1,0 | 0,5 | 1,8 |
| Gitterschnitt* | 0 | 0 | 0 | 0 |
| Erichsentiefung (mm) | 8,3 | 9,5 | 9,0 | 9,7 |

*0 = bester Wert
5 = schlochtester Wert

**Patentansprüche**

1. Wasserverdünnbare Bindemittel für kationische Elektrotauchlacke auf der Basis von modifizierten Epoxidharzen, die Ammonium-, Sulfonium- und/oder Phosphonium-gruppe enthalten, dadurch gekennzeichnet, daß die Bindemittel durch eine Umsetzung von

(A) einem Diglycidylether eines Polyphenols oder einem Diglycidylether eines mehrwertigen Alkohols oder einem Diglycidylester einer Polycarbonsäure oder einer Diepoxidverbindung, die durch Epoxidierung einer olefinisch ungesättigten alicyclischen Verbindung erhältlich ist, oder einem Gemisch von solchen Diepoxidverbindungen, wobei das Epoxidäquivalentgewicht der Diepoxidverbindungen unter 2000 liegt, mit

(B) einer Verbindung der allgemeinen Formel $R^1$—OH, wobei $R^1$ folgende Bedeutung haben kann

$R^1$ = Aryl oder $R^2$ 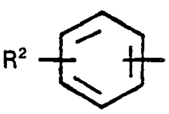

$R^2$ = H, Alkyl (bevorzugt mit 1 bis 20 C-Atomen, besonders bevorzugt t-Butyl, Nonyl, Dodecyl), $R^3$—$O_3$— (bevorzugt in p-Stellung zur phenolischen OH-Gruppe) mit $R^3$ = Alkyl (bevorzugt mit 1 bis 10 C-Atomen, besonders bevorzugt Methyl) oder HO—(—$CHR^4CH_2$—O—)$_n$—$CHR^4CH_2$— mit n = 0—10 und $R^4$ = H oder Methyl,

oder eine Verbindung der allgemeinen Formel $R^5$—SH, wobei $R^5$ folgende Bedeutung haben kann

$R^5$ = Alkyl (bevorzugt mit 1 bis 20 C-Atomen, besonders bevorzugt n-Butyl, Dodecyl), Cycloalkyl (bevorzugt Cyclohexyl), Aryl (besonders bevorzugt Phenyl), Aralkyl (besonders bevorzugt Benzyl), $R^6$—OOC—$CH_2$—, $R^7$—OOC $CH_2CH_2$— $R^6$, $R^7$ = Alkyl mit 1 bis 8 C-Atomen, bevorzugt Butyl, 2 Ethyl-hexyl, oder einem Gemisch aus solchen Verbindungen und

(C) primären und/oder sekündaren Aminen oder deren Salzen und/oder dem Salz eines tertiären Amins, einer Sulfid/Säure- oder Phosphin/Säuremischung oder einem Gemisch aus diesen Verbindungen erhältich sind, wobei die Komponenten A und B in einem Molverhältnis von 10:1 bis 1:1, bevorzugt 4:1 bis 1,5:1 eingesetzt werden, die Umsetzung der Komponente A mit der Komponente B bei 100 bis 190°C gegebenenfalls in Anwesenheit eines Katalysators durchgeführt und die Wasserverdünnbarkeit gegebenenfalls durch Protonisierung mit einer wasserlöslichen Säure erreicht wird.

2. Bindemittel nach Anspruch 1, dadurch gekennzeichnet, daß als Komponente (A) ein Bisphenol-A-diglycidylether mit einem Epoxid Äquivalentgewicht unter 2 000 eingesetzt worden ist.

3. Bindemittel nach Anspruch 1 oder 2, dadurch gekennzeichnet, daß bei der Umsetzung noch

(D) ein polyfunktioneller Alkohol, eine Polycarbonsäure, ein Polyamin, ein Polysulfid, ein Polyphenol oder ein Gemisch aus diesen Verbindungen

eingesetzt wird, wobei die als Komponente (D) eingesetzten Verbindungen Molekulargewichte von 100 bis 3500, bevorzugt 350 bis 1000, aufweisen.

4. Bindemittel, nach Anspruch 3, darurch gekennzeichnet, daß der Anteil der eingesetzten Menge an Komponente D5 bis 60 Gewichtsprozent, bezogen auf die Summe der Komponenten A, B und D, beträgt und in Abhängigkeit von Molekulargewicht der Komponente D so gewählt wird, daß das molare Verhältnis zwischen dem Reaktionsprodukt aus A und B und der Komponente D 4:1 bis 0,8:1, bevorzugt 2:1 beträgt.

5. Bindemittel nach Anspruch 3 oder 4, dadurch gekennzeichnet, daß als Komponente D ein Polyphenol oder ein Gemisch von Polyphenolen der allgemeinen Formel (I) eingesetzt wird

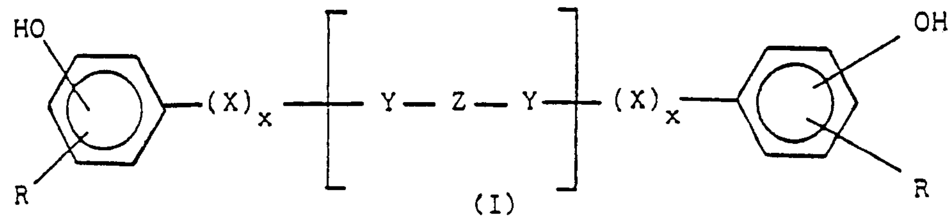

(I)

in der beuten

X = Alkylen, Arylen, Alkarylen
O, O-Alkylen, O-Arylen, O-Alkylarylen
S, S-Alkylen, S-Arylen, S-Alkarylen
CO, CO-Alkylen, CO-Arylen, CO-Alkarylen
NH, NH-Alkylen, NH-Arylen, NH-Alkarylen

x = 0 oder 1

Y = X, 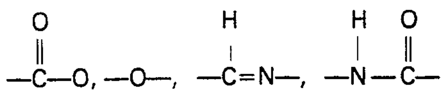

Z = Alkylen, Alkylenrest auf Basis von Polyestern, Polyethern, Polyamiden, Polycarbonaten, Polyurethanen

R = H, $CH_3$, Alkyl, —O, —$CH_3$, —O—Alkyl, —$NO_2$ $NR'_2$, —NR' R'', —NHCOR'''

6. Bindemittel nach den Ansprüchen 1 bis 5, dadurch gekennzeichnet, daß es durch Umsetzung mit einem teilblockierten Polyisocyanat selbstvernetzbar gemacht worden ist und/oder ein Vernetzungsmittel enthält.

7. Verfahren zur Herstellung von wasserverdünnbaren Bindemitteln für kationische Elektrotauchlacke auf der Basis von modifizierten Epoxidharzen, die Ammonium-, Sulfonium- und/oder Phosphoniumgruppen enthalten, dadurch gekennzeichnet, daß

(A) ein Diglycidylether eines Polyphenols oder ein Diglycidylether eines mehrwertigen Alkohols oder ein Diglycidylester einer Polycarbonsäure oder einer Diepoxidverbindung, die durch Epoxidierung einer olefinisch ungesättigten alicyclischen Verbindung erhältlich ist, oder ein Gemisch von solchen Diepoxidverbindungen, wobei das Epoxidäquivalentgewicht der Diepoxidverbindungen unter 2000 liegt, mit

(B) einer Verbindung der allgemeinen Formel $R^1$—OH, wobei $R^1$ folgende Bedeutung haben kann

$R^1$ = Aryl oder $R^2$ 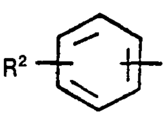

$R^2$ = H, Alkyl (bevorzugt mit 1 bis 20 C-Atomen, besonders bevorzugt t-Butyl, Nonyl, Dodecyl), $R^3$—$O_3$— (bevorzugt in p-Stellung zur phenolischen OH-Gruppe) mit $R^3$ = Alkyl (bevorzugt mit 1 bis 10 C-Atomen, besonders bevorzugt Methyl) oder HO—(—$CHR^4CH_2$—O—$)_n$—$CHR^4CH_2$— mit n = 0—10 und $R^4$ = H oder Methyl,

oder eine Verbindung der allgemeinen Formel $R^5$—SH, wobei $R^5$ folgende Bedeutung haben kann

$R^5$ = Alkyl (bevorzugt mit 1 bis 20 C-Atomen, besonders bevorzugt n-Butyl, Dodecyl), Cycloalkyl (bevorzugt Cyclohexyl), Aryl (besonders bevorzugt Phenyl), Aralkyl (besonders bevorzugt Benzyl), $R^6$—OOC—$CH_2$—, $R^7$—OOC $CH_2CH_2$— $R^6$, $R^7$ = Alkyl mit 1 bis 8 C-Atomen, bevorzugt Butyl, 2 Ethyl-hexyl, oder einem Gemisch aus solchen Verbindungen und

(C) primären und/oder sekündaren Aminen oder deren Salzen und/oder dem Salz eines tertiären Amins, einer Sulfid/Säure- oder Phosphin/Säuremischung oder einem Gemisch aus diesen Verbindungen umgesetzt wird, wobei die Komponenten A und B in einem Molverhältnis von 10:1 bis 1:1, bevorzugt 4:1 bis 1,5:1 eingesetzt werden, die Umsetzung der Komponente A mit der Komponente B bei 100 bis 190°C gegebenenfalls in Anwesenheit eines Katalysators durchgeführt und die Wasserverdünnbarkeit gegebenenfalls durch Protonisierung mit einer wasserlöslichen Säure erreicht wird.

8. Verfahren nach Anspruch 7, dadurch gekennzeichnet, daß als Komponente (A) ein Bisphenol-A-diglycidylether mit einem Epoxid-Äquivalentgewicht unter 2000 eingesetzt wird.

9. Verfahren nach Anspruch 7 oder 8, dadurch gekennzeichnet, daß noch mit

(D) einem polyfunktionellen Alkohol, einer Polycarbonsäure, einem Polyamin, einem Polysulfid, einem Polyphenol oder einem Gemisch aus diesen Verbindungen

umgesetzt wird, wobei die als Komponente (D) eingesetzten Verbindungen Molekulargewichte von 100 bis 3500, bevorzugt 350 bis 1000, aufweisen.

10. Verfahren nach Anspruch 9, dadurch gekennzeichnet, daß der Anteil der eingesetzten Menge an Komponente D 5 bis 60 Gewichtsprozent, bezogen auf die summe der Komponenten A, B und D, beträgt und in Abhängigkeite vom Molekulargewicht der Komponente D so gewählt wird, daß das molare Verhältnis zwischen dem Reaktionsprodukt aus A und B und der Komponente D 4:1 bis 0,8:1, bevorzugt 2:1 beträgt.

11. Verfahren nach Anspruch 9 oder 10, dadurch gekennzeichnet, daß als Komponente D ein Polyphenol oder ein Gemisch von Polyphenolen der allgemeinen Formel (I) eingesetzt wird

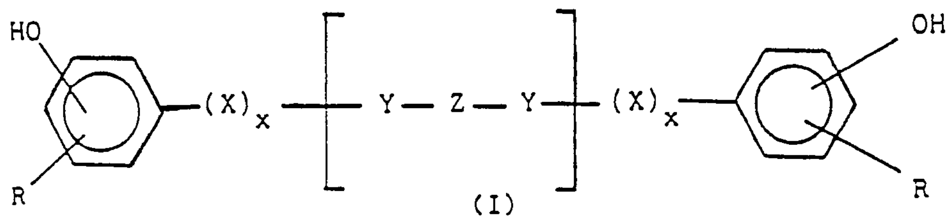

(I)

in der bedeuten

X = Alkylen, Arylen, Alkarylen
O, O-Alkylen, O-Arylen, O-Alkarylen
S, S-Alkylen, S-Arylen, S-Alkarylen
CO, CO-Alkylen, CO-Arylen, CO-Alkarylen
NH, NH-Alkylen, NH-Arylen, NH-Alkarylen

x = 0 oder 1

Y = X, 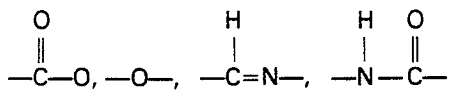

Z = Alkylen, Alkylenrest auf Basis von Polyestern, Polyethern, Polyamiden, Polycarbonaten, Polyurethanen

R = H, $CH_3$, Alkyl, —O, —$CH_3$, —O—Alkyl, —$NO_2$ $NR'_2$, —NR' R'', —NHCOR'''

12. Verfahren nach den Ansprüchen 7 bis 11, dadurch gekennzeichnet, daß die Bindemittel durch Umsetzung mit einem teilblockierten Polyisocyanat selbstvernetzbar gemacht werden und/oder ein Vernetzungsmittel eingesetzt wird.

13. Verfahren zum elektrophoretischen Beschichten eines als Kathode geschalteten elektrisch leitenden Substrates in einem wäßrigen Bad, das neben üblichen Zusätzen wasserverdünnbare, kationische Bindemittel, die entweder durch Umsetzung mit einem teilblockierten Polyisocyanat selbstvernetzbar gemacht worden sind oder durch in Bad vorhandene Vernetzungemittel vernetzt werden können, enthält, dadurch gekennzeichnet, daß die Bindemittel durch eine Umsetzung von

(A) einem Diglycidylether eines Polyphenols oder einem Diglycidylether eines mehrwertigen Alkohols oder einem Diglycidylester einer Polycarbonsäure oder einer Diepoxidverbindung, die durch Epoxidierung einer olefinisch ungesättigten alicyclischen Verbindung erhältlich ist, oder einem Gemisch von solchen Diepoxidverbindungen, wobei das Epoxidäquivalentgewicht der Diepoxidverbindungen unter 2000 liegt, mit

(B) einer Verbindung der allgemeinen Formel $R^1$—OH, wobei $R^1$ folgende Bedeutung haben kann

$R^1$ = Aryl oder $R^2$ 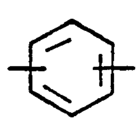

$R^2$ = H, Alkyl (bevorzugt mit 1 bis 20 C-Atomen, besonders bevorzugt t-Butyl, Nonyl, Dodecyl), $R^3$—$O_3$— (bevorzugt in p-Stellung zur phenolischen OH-Gruppe) mit $R^3$ = Alkyl (bevorzugt mit 1 bis 10 C-Atomen, besonders bevorzugt Methyl) oder HO—(—$CHR^4CH_2$—O—$)_n$—$CHR^4CH_2$— mit n = 0—10 und $R^4$ = H oder Methyl,

oder eine Verbindung der allgemeinen Formel $R^5$—SH, wobei $R^5$ folgende Bedeutung haben kann

$R^5$ = Alkyl (bevorzugt mit 1 bis 20 C-Atomen, besonders bevorzugt n-Butyl, Dodecyl), Cycloalkyl (bevorzugt Cyclohexyl), Aryl (besonders bevorzugt Phenyl), Aralkyl (besonders bevorzugt Benzyl), $R^6$—OOC—$CH_2$—, $R^7$—OOC $CH_2CH_2$— $R^6$, $R^7$ = Alkyl mit 1 bis 8 C-Atomen, bevorzugt Butyl, 2 Ethyl-hexyl, oder einem Gemisch aus solchen Verbindungen und
Gemisch aus solchen Verbindungen und

(C) primären und/oder sekündaren Aminen oder deren Salzen und/oder dem Salz eines tertiären Amins, einer Sulfid/Säure- oder Phosphin/Säuremischung oder einem Gemisch aus diesen Verbindungen erhältich sind, wobei die Komponenten A und B in einem Molverhältnis von 10:1 bis 1:1, bevorzugt 4:1 bis 1,5:1 eingesetzt werden, die Umsetzung der Komponente A mit der Komponente B bei 100 bis 190°C

gegebenenfalls in Anwesenheit eines Katalysators durchgeführt und die Wasserverdünnbarkeit gegebenenfalls durch Protonisierung mit einer wasserlöslichen Säure erreicht wird.

**Revendications**

1. Liants diluables dans l'eau pour laques d'électrodéposition cationiques, à base de résines époxydiques modifiées, qui contiennent des groupes ammonium, sulfonium et/ou phosphonium, caractérisés par le fait que les liants peuvent être obtenus par une réaction

(A) d'un diglycidyléther d'un polyphénol ou d'un diglycidyléther d'un alcool ou d'un ester diglycidylique d'un acide polycarboxylique ou d'un composé diépoxydique, qui peut être obtenu par époxydation d'un composé alicyclique à insaturation oléfinique, ou d'un mélange de tels composés diépoxydiques, le poids équivalent en époxyde des composés diépoxydiques se situant au-dessous de 2000, avec

(B) un composé de la formule générale $R^1$—OH, où $R^1$ peut avoir la signification suivante:

$R^1$ = aryle ou 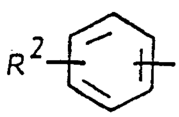

$R^2$= H, alkyle (de préférence avec 1 à 20 atomes de carbone, de façon particulièrement préferée, t-butyle, nonyle, dodécyle), $R^3$—O— (de préférence en position p par rapport au groupe OH phénolique) avec $R^3$ = alkyle (de préférence avec 1 à 10 atomes de C, de façon particulièrement préférée, méthyle) ou HO—(—$CHR^4CH_2$—O—$)_n$—$CHR^4CH_2$— avec n = 0—10 et $R^4$ = H ou méthyle,
ou un composé de la formule générale $R^5$—SH, où $R^5$ peut avoir la signification suivante:

$R^5$ alkyle (de préférence avec 1 à 20 atomes, de façon particulièrement préférée, n-butyle, dodécyle), cycloalkyle (de préférence, cyclohexyle), aryle (de façon particulièrement préférée, phényle), aralkyle (de façon particulièrement préférée, benzyle), $R^6$—OOC—$CH_2$—, $R^7$—$OOCCH_2CH_2$— $R_6$, $R_7$ = alkyle avec 1 à 8 atomes de carbone, de préférence, butyle, éthyl-2 hexyle,
ou un mélange de tels composés, et

(C) des amines primaires et/ou secondaires ou leurs sels et/ou le sel d'une amine tertiaire, un mélange sulfure/acide ou phosphine/acide ou un mélange de ces composés,
les composants (A) et (B) étant utilisés dans un rapport molaire de 10:1 à 1:1, de préférence, de 4:1 à 1,5:1, la réaction du composant (A) avec le composant (B) étant conduite à une température de 100 à 190°C, les cas échéant en présence d'un catalyseur, et l'aptitude à la dilution dans l'eau étant obtenue les cas échéant par protection par un acide soluble dans l'eau.

2. Liants selon la revendication 1, caractérisés par le fait que, comme composant (A), à été utilisé un diglycidyl/éther du bisphénol A présentant un poids équivalent en époxyde inférieur à 2000.

3. Liants selon l'une des revendications 1 ou 2, caractérisés par le fait que dans la réaction, est encore utilisé

(D) un alcool polyfonctionnel, un acide polycarboxylique, une polyamine, un polysulfure, un polyphénol ou un mélange de ces composés,
les composés utilisés comme composant (D) présentant des masses moléculaires de 100 à 3500, de préférence, de 350 à 1000.

4. Liants selon la revendication 3, caractérisés par le fait que la fraction des quantités utilisées en composant (D) s'élève à 5 à 60 pour cent en poids, par rapport à la somme des composants (A), (B) et (D), et est choisie en fonction de la masse moléculaire du composant (D) de sorte que le rapport molaire entre le produit de réaction de (A) et (B) et le composant (D) s'élève à 4:1 à 0.8:1, de préférence à 2:1.

5. Liants selon l'une des revendications 3 ou 4, caractérisés par le fait que, comme composant (D), est utilisé un polyphénol ou un mélange de polyphénols de formule générale (I):

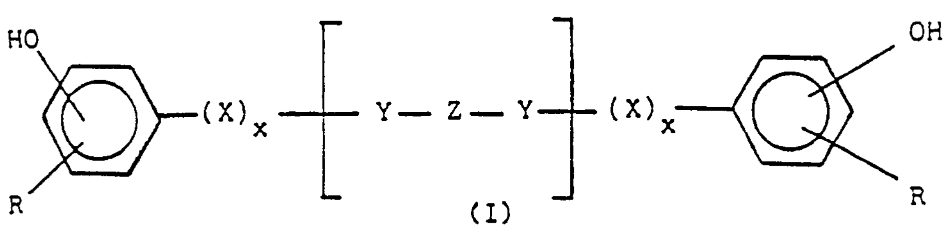

(I)

dans laquelle:

X = alkylène, arylène, alkarylène
O, O-alkylène, O-arylène, O-alkylarylène
S, S-alkylène, S-arylène, S-alkarylène
CO, CO-alkylène, CO-arylène, CO-alkarylène
NH, NH-alkylène, NH-arylène, NH-alkarylène

x = 0 ou 1

Y = X, 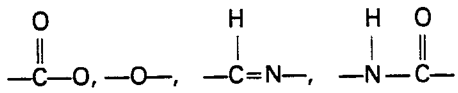

Z = alkylène, reste alkylène à base de polyesters, polyéthers, polyamides, polycarbonates, polyuréthannes

R = H, $CH_3$, alkyle, —O, —$CH_3$, —O—alkyle, —$NO_2$ $NR'_2$, —NR'R'', —NHCOR'''

6. Liants selon les revendications 1 à 5, caractérisés par le fait qu'il à été rendu auto-réticulable par réaction avec un polyisocyanate partiellement bloqué et/ou qu'il contient un agent réticulant.

7. Procédé de fabrication de liants diluables dans l'eau pour laques d'électrodéposition cationiques à base de résines époxydiques modifiées, qui contiennent des groupes ammonium, sulfonium et/ou phosphonium, caractérisé par le fait qu'on fait réagir

(A) un diglycidyléther d'un polyphénol ou un diglycidyléther d'un alcool polyvalent ou un ester diglycidylique d'un acide polycarboxylique ou un composé diépoxydique, qui peut être obtenu par époxydation d'un composé alicyclique à insaturation oléfinique, ou un mélange de tels composés diépoxydiques, le poids équivalent en époxyde des composés diépoxydiques se situant au-dessous de 2000, avec

(B) un composé de la formule générale $R^1$—OH, où $R^1$ peut avoir la signification suivante:

$R^1$ = aryle ou 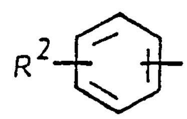

$R^2$= H, alkyle (de préférence avec 1 à 20 atomes de carbone, de façon particulièrement préferée, t-butyle, nonyle, dodécyle), $R^3$—O— (de préférence en position p par rapport au groupe OH phénolique) avec $R^3$ = alkyle (de préférence avec 1 à 10 atomes de C, de façon particulièrement préférée, méthyle) ou HO—(—$CHR^4CH_2$—O—)$_n$—$CHR^4CH_2$— avec n = 0—10 et $R^4$ = H ou méthyle,

ou un composé de la formule générale $R^5$—SH, où $R^5$ peut avoir la signification suivante:

$R^5$ = alkyle (de préférence avec 1 à 20 atomes, de façon particulièrement préférée, n-butyle, dodécyle), cycloalkyle (de préférence, cyclohexyle), aryle (de façon particulièrement préférée, phényle), aralkyle (de façon particulièrement préférée, benzyle), $R^6$—OOC—$CH_2$—, $R^7$—$OOCCH_2CH_2$— $R_6$, $R_7$ = alkyle avec 1 à 8 atomes de carbone, de préférence, butyle, éthyl-2 hexyle,

ou un mélange de tels composés, et

(C) des amines primaires et/ou secondaires ou leurs sels et/ou le sel d'une amine tertiaire, un mélange sulfure/acide ou phosphine/acide ou un mélange de ces composés,

les composants (A) et (B) étant utilisés dans un rapport molaire de 10:1 à 1:1, de préférence, de 4:1 à 1,5:1, la réaction du composant (A) avec le composant (B) étant conduite à une température de 100 à 190°C, les cas échéant en présence d'un catalyseur, et l'aptitude à la dilution dans l'eau étant obtenue les cas échéant par protonation par un acide soluble dans l'eau.

8. Procédé selon la revendication 7, caractérisé par le fait que l'on utilise, comme composant (A), un diglycidyléther du bisphénol A présentant un poids équivalent en époxyde inférieur à 2000.

9. Procédé selon l'une des revendications 7 ou 8, caractérisé par le fait que l'on fait réagir encore avec

(D) un alcool polyfonctionnel, un acide polycarboxylique, une polyamine, un polysulfure, un polyphénol ou un mélange de ces composés

les composés utilisés comme composant (D) présentant des masses moléculaires de 100 à 3500, de préférence, de 350 à 1000.

10. Procédé selon la revendication 9, caractérisé par le fait que la fraction des quantités utilisées en composant (D) s'élève à 5 à 60 pour cent en poids, par rapport à la somme des composants (A), (B) et (D), et est choisie en fonction de la masse moléculaire du composant (D) de sorte que le rapport molaire entre le produit de réaction de (A) et (B) et le composant (D) s'élève à 4:1 à 0.8:1, de préférence à 2:1.

11. Procédé selon l'une des revendications 9 ou 10, caractérisé par le fait que, comme composant (D), est utilisé un polyphénol ou un mélange de polyphénols de formule générale (I):

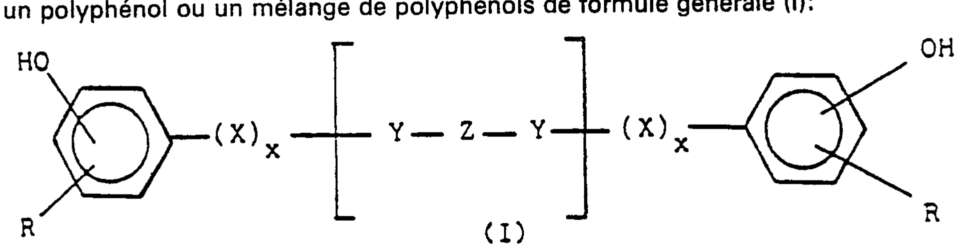

(I)

dans laquelle:

X = alkylène, arylène, alkarylène
O, O-alkylène, O-arylène, O-alkarylène

S, S-alkylène, S-arylène, S-alkarylène
CO, CO-alkylène, CO-arylène, CO-alkarylène
NH, NH-alkylène, NH-arylène, NH-alkarylène

x = 0 ou 1

Y = X, 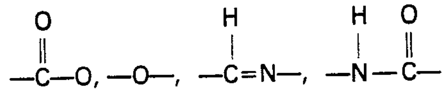

Z = alkylène, reste alkylène à base de polyesters, polyéthers, polyamides, polycarbonates, polyuréthannes

R = H, $CH_3$, alkyle, —O, —$CH_3$, —O—alkyle, —$NO_2$ $NR'_2$, —NR'R'', —NHCOR'''

12. Procédé selon l'une des revendications 7 à 11, caractérisé par le fait qu'on rend les liants auto-réticulables par réaction avec un polyisocyanate partiellement bloqué et/ou qu'on utilise un agent de réticulation.

13. Procédé pour le rêvêtement électrophorétique d'un substrat monté en cathode dans un bain aqueux, qui contient, en dehors des additifs usuels, des liants cationiques, diluables dans l'eau, ou bien qui ont été rendus auto-réticulables par réaction avec un polyisocyanate partiellemenet bloqué, ou bien qui peuvent être réticulés par un agent de réticulation présent dans le bain, caractérisé par le fait que les liants peuvent être obtenus par une réaction

(A) d'un diglycidyléther d'un polyphénol ou d'un diglycidyléther d'un alcool polyvalent ou d'un ester diglycidylique d'un acide polycarboxylique ou d'un composé diépoxydique, qui peut être obtenu par époxydation d'un composé alicyclique à insaturation oléfinique, ou un mélange de tels composés diépoxydiques, le poids équivalent en époxyde des composés diépoxydiques se situant au-dessous de 2000, avec

(B) un composé de la formule générale $R^1$—OH, où $R^1$ peut avoir la signification suivante:

$R^1$ = aryle ou 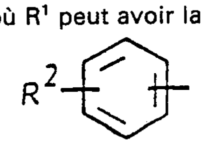

$R^2$= H, alkyle (de préférence avec 1 à 20 atomes de carbone, de façon particulièrement préferée, t-butyle, nonyle, dodécyle), $R^3$—O— (de préférence en position p par rapport au groupe OH phénolique) avec $R^3$ = alkyle (de préférence avec 1 à 10 atomes de C, de façon particulièrement préférée, méthyle) ou HO—(—$CHR^4CH_2$—O—$)_n$—$CHR^4CH_2$— avec n = 0—10 et $R^4$ = H ou méthyle,
ou un composé de la formule générale $R^5$—SH, où $R^5$ peut avoir la signification suivante:

$R^5$ alkyle (de préférence avec 1 à 20 atomes, de façon particulièrement préférée, n-butyle, dodécyle), cycloalkyle (de préférence, cyclohexyle), aryle (de façon particulièrement préférée, phényle), aralkyle (de façon particulièrement préférée, benzyle), $R^6$—OOC—$CH_2$—, $R^7$—$OOCCH_2CH_2$— $R_6$, $R_7$ = alkyle avec 1 à 8 atomes de carbone, de préférence, butyle, éthyl-2 hexyle,
ou un mélange de tels composés, et

(C) des amines primaires et/ou secondaires ou leurs sels et/ou le sel d'une amine tertiaire, un mélange sulfure/acide ou phosphine/acide ou un mélange de ces composés,
les composants (A) et (B) étant utilisés dans un rapport molaire de 10:1 à 1:1, de préférence, de 4:1 à 1,5:1, la réaction du composant (A) avec le composant (B) étant conduite à une température de 100 à 190°C, les cas échéant en présence d'un catalyseur, et l'aptitude à la dilution dans l'eau étant obtenue les cas échéant par protection par un acide soluble dans l'eau.

**Claims**

1. Water-dilutable binders for cationic electrocoating finished based on modified epoxy resins containing ammonium, sulphonium and/or phosphonium groups, characterized in that the binders are obtainable by reacting

(A) a diglycidyl ether of a polyphenol or a diglycidyl ether of a polyhydric alcohol or a diglycidyl ester of a polycarboxylic acid or a diepoxide compound btained by epoxidation of an olefinically unsaturated alicyclic compound, or a mixture of diepoxide compounds of this type, the epoxide equivalent weight of the diepoxide compounds being below 2,000, with

(B) a compound of the general formula $R^1$—OH, where $R^1$ can have the following meaning

$R^1$ = aryl or 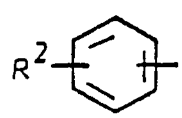

$R^2$ = H, alkyl (preferably having 1 to 20 C atoms, particularly preferably t-butyl, nonyl or dodecyl), $R^3$—O— (preferably in the p-position to the phenolic OH group) where $R^3$ = alkyl (preferably having 1 to 10

C atoms, particularly preferably methyl) or $HO—(—CHR^4CH_2—O—)_n—CHR^4CH_2—$ where n = 0—10 and $R^4$ = H or methyl,
or a compound of the general formula $R^5—SH—$, where $R^5$ can have the following meaning
$R^5$ = alkyl (preferably having 1 to 20 C atoms, particularly preferably n-butyl, or dodecyl), cycloalkyl (preferably cyclohexyl), aryl (particularly preferably phenyl), aralkyl (particularly preferably benzyl), $R^6—OOC—CH_2—$ or $R^7—OOC\ CH_2CH_2—$, $R^6$ and $R^7$ = alkyl having 1 to 8 C atoms, preferably butyl or 2-ethylhexyl,
or a mixture of compounds of this type, and
(C) primary and/or secondary amines or their salts and/or the salts of a tertiary amine, a sulphide/acid mixture or phosphine/acid mixture or a mixture of these compounds,
the components A and B being used in a molar ratio from 10:1 to 1:1, preferably from 4:1 to 1.5:1, the reaction of component A with component B being carried out at 100 to 190°C, if desired in the presence of a catalyst, and, if further desired, the dilutability with water being obtained by protonation with a watersoluble acid.

2. Binder according to Claim 1, characterized in that a bisphenol A diglycidyl ether with an epoxide equivalent weight of below 2,000 has been employed as component (A).

3. Binder according to Claim 1 or 2, characterized in that
(D) a polyfunctional alcohol, a polycarboxylic acid, a polyamine, a polysulphide, a polyphenol or a mixture of these compounds
is also employed in the reaction, the compound employed as component (D) having molecular weights of 100 to 3,500, preferably 350 to 1,000.

4. Binder according to Claim 3, characterized in that the proportion of the amount of component D used is 5 to 60 percent by weight, based on the sum of the components A, B and D, and is chosen in relation to the molecular weight of component D so that the molar ratio between the reaction product of A and B and the component D is from 4:1 to 0.8:1, preferably 2:1.

5. Binder according to Claim 3 or 4, characterized in that a polyphenol or a mixture of polyphenols of the formula (I) is used as component D,

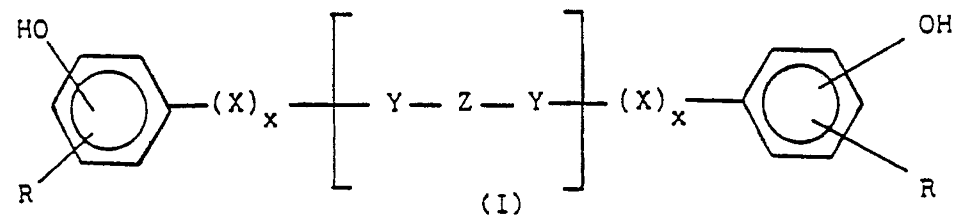

(I)

in which
X = alkylene, arylene, alkarylene
O, O-alkylene, O-arylene, O-alkarylene
S, S-alkylene, S-arylene, S-alkarylene
CO, CO-alkylene, CO-arylene, CO-alkarylene
NH, NH-alkylene, NH-arylene, NH-alkarylene
x = 0 or 1

Y = X, 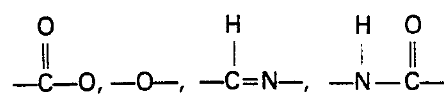

Z = alkylene or alkylene radical based on polyesters, polyethers, polyamides, polycarbonates or polyurethanes,
R = H, $CH_3$, alkyl, —O, —$CH_3$, —O—alkyl, —$NO_2$ $NR'_2$, —NR'R'', or —NHCOR'''.

6. Binder according to Claims 1 to 5, characterized in that the binder has been made self-crosslinkable by reaction with a partly blocked polyisocyanate and/or contains a crosslinking agent.

7. Process for the preparation of water-dilutable binders for cationic electrocoating finished based on modified epoxy resins containing ammonium, sulphonium and/or phosphonium groups, characterized in that
(A) a diglycidyl ether of a polyphenol or a diglycidyl ether of a polyhydric alcohol or a diglycidyl ester of a polycarboxylic acid or a diepoxide compound obtainable by epoxidation of an olefinically unsaturated alicyclic compound, or a mixture of diepoxide compounds of this type, the epoxide equivalent weight of the diepoxide compounds being below 2,000, is reacted with
(B) a compound of the general formula $R^1—OH$, where $R^1$ can have the following meaning

$R^1$ = aryl or 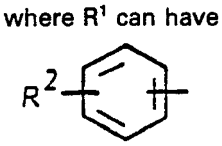

$R^2$ = H, alkyl (preferably having 1 to 20 C atoms, particularly preferably t-butyl, nonyl or dodecyl), $R^3$—O— (preferably in the p-position to the phenolic OH group) where $R^3$ = alkyl (preferably having 1 to 10 C atoms, particularly preferably methyl) or HO—(—$CHR^4CH_2$—O—)$_n$—$CHR^4CH_2$— where n = 0—10 and $R^4$ = H or methyl,

or a compound of the general formula $R^5$—SH—, where $R^5$ can have the following meaning

$R^5$ = alkyl (preferably having 1 to 2 C atoms, particularly preferably n-butyl, or dodecyl), cycloalkyl (preferably cyclohexyl), aryl (particularly preferably phenyl), aralkyl (particularly preferably benzyl), $R^6$—OOC—$CH_2$— or $R^7$—OOC $CH_2CH_2$—, $R^6$ and $R^7$ = alkyl having 1 to 8 C atoms, preferably butyl or 2-ethylhexyl,

or a mixture of compounds of this type, and

(C) primary and/or secondary amines or their salts and/or the salts of a tertiary amine, a sulphide/acid mixture or phosphine/acid mixture or a mixture of these compounds,

the components A and B being used in a molar ratio from 10:1 to 1:1, preferably from 4:1 to 1.5:1, the reaction of component A with component B being carried out at 100 to 190°C, if desired in the presence of a catalyst, and, if further desired, the dilutability with water being obtained by protonation with a watersoluble acid.

8. Process according to Claim 7, characterized in that a bisphenol A diglycidyl ether having an epoxide equivalent weight of below 2,000 is used as component A.

9. Process according to Claim 7 or 8, characterized in that

(D) a polyfunctional alcohol, a polycarboxylic acid, a polyamine, a polysulphide, a polyphenol or a mixture of these compounds

is also reacted, the compounds employed as component (D) having molecular weights of 100 to 3,500, preferably 350 to 1,000.

10. Process according to Claim 9, characterized in that the proportion of component D used is 5 to 60 percent by weight, based on the sum of the components A, B and D, and is chosen in relation to the molecular weight of component D so that the molar ratio between the reaction product of A and B and the component D is from 4:1 to 0.8:1, preferably 2:1.

11. Process according to Claim 9 or 10, characterized in that a polyphenol or a mixture of polyphenols of the formula (I) is used as component D,

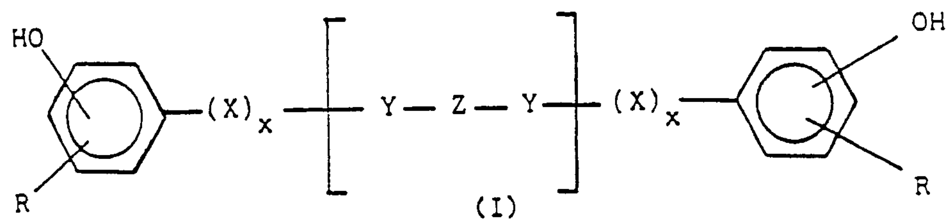

(I)

in which

X = alkylene, arylene, alkarylene
O, O-alkylene, O-arylene, O-alkarylene
S, S-alkylene, S-arylene, S-alkarylene
CO, CO-alkylene, CO-arylene, CO-alkarylene
NH, NH-alkylene, NH-arylene, NH-alkarylene

x = 0 or 1

Y = X, 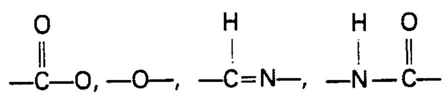

Z = alkylene or alkylene radical based on polyesters, polyethers, polyamides, polycarbonates or polyurethanes,

R = H, $CH_3$, alkyl, —O, —$CH_3$, —O—alkyl, —$NO_2$ $NR'_2$, —NR'R'', or —NHCOR'''.

12. Process according to Claim 7 or 11, characterized in that the binders are made self-crosslinkable by reaction with a partly blocked polyisocyanate and/or a crosslinking agent is employed.

13. Process for the electrophoretic coating of an electrically conducting substrate connected as cathode in an aqueous bath which contains, besides the usual additives, water-dilutable cationic binders which have either been made self-crosslinkable by reaction with a partially blocked polyisocyanate or can be crosslinked by crosslinking agents present in the bath, characterized in that the binders are obtainable by reacting

(A) a diglycidyl ether of a polyphenol or a diglycidyl ether of a polyhydric alcohol or a diglycidyl ester of a polycarboxylic acid or a diepoxide compound btained by epoxidation of an olefinically unsaturateed alicyclic compound, or a mixture of diepoxide compounds of this type, the epoxide equivalent weight of the diepoxide compounds being below 2,000, with

(B) a compound of the general formula $R^1$—OH, where $R^1$ can have the following meaning

$R^1$ = aryl or 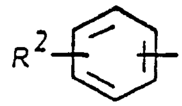

$R^2$ = H, alkyl (preferably having 1 to 20 C atoms, particularly preferably t-butyl, nonyl or dodecyl), $R^3$—O— (preferably in the p-position to the phenolic OH group) where $R^3$ = alkyl (preferably having 1 to 10 C atoms, particularly preferably methyl) or HO—(—$CHR^4CH_2$—O—$)_n$—$CHR^4CH_2$— where n = 0—10 and $R^4$ = H or methyl,

or a compound of the general formula $R^5$—SH—, where $R^5$ can have the following meaning

$R^5$ = alkyl (preferably having 1 to 2 C atoms, particularly preferably n-butyl, or dodecyl), cycloalkyl (preferably cyclohexyl), aryl (particularly preferably phenyl), aralkyl (particularly preferably benzyl), $R^6$—OOC—$CH_2$— or $R^7$—OOC $CH_2CH_2$—, $R^6$ and $R^7$ = alkyl having 1 to 8 C atoms, preferably butyl or 2-ethylhexyl,

or a mixture of compounds of this type, and

(C) primary and/or secondary amines or their salts and/or the salts of a tertiary amine, a sulphide/acid mixture or phosphine/acid mixture or a mixture of these compounds,

the components A and B being used in a molar ratio from 10:1 to 1:1, preferably from 4:1 to 1.5:1, the reaction of component A with component B being carried out at 100 to 190°C, if desired in the presence of a catalyst, and, if further desired, the dilutability with water being obtained by protonation with a water-soluble acid.